# EUROPÄISCHE PATENTANMELDUNG

(11) **EP 4 711 634 A1**
(43) Veröffentlichungstag der Anmeldung: **18.03.2026**
(21) Anmeldenummer: 24199960.6
(22) Anmeldetag: 12.09.2024
(51) Int. Cl.: F16C 33/12

(54) **GLEITELEMENT MIT BESCHICHTUNG**

(71) Anmelder: Miba Gleitlager Austria GmbH, 4663 Laakirchen (AT)
(72) Erfinder: Bergmann, Philipp, 4663 Laakirchen (AT); Buchsbaum, Andreas, 4663 Laakirchen (AT); Bohlmann, Marcus, 4663 Laakirchen (AT)
(74) Vertreter: Harringer, Thomas

(57) **Zusammenfassung**

Die Erfindung betrifft ein Gleitelement mit einer Basisschicht und einer auf einer Außenfläche der Basisschicht vorgesehenen Beschichtung, wobei eine Formfläche so definiert ist, dass sie eine Außenfläche der Beschichtung darstellt, und wobei eine Radon-Transformierte g(θ,ρ) eines quadratischen Ausschnitts dieser Formfläche definiert ist, deren Wertebereich auf Werte zwischen 0 und 1 normalisiert ist, und wobei θ der Winkel und ρ die Distanz zum Koordinatenursprung darstellt, und wobei die Radon-Transformierte g(θ,ρ) in ρ-Richtung um den Faktor 1/√2 gekürzt wird, und wobei für jeden Winkel θ eine Standardabweichung der Radon-Transformierten σ_{ρ}(θ) und ein Wert 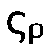 (θ) = Σ_{ρ} |g(θ,p )- *g̅*| der Radon-Transformierten definiert ist, wobei *g̅* der Mittelwert aller g(θ,ρ) des jeweiligen Winkel θ ist, und wobei σₘₐₓ, σₘᵢₙ, σ̅ , die maximale Standardabweichung, die minimale Standardabweichung und der Mittelwert der Standardabweichungen ist, sowie 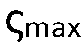 , 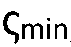 , 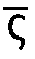 das Maximum der Werte 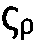 , das Minimum der Werte 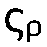 und der Mittelwert der Werte 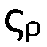 ist , und wobei ein Parameter A definiert ist als A = (σₘₐₓ-σₘᵢₙ)/σ̅ * ()/().

## Beschreibung

Die Erfindung betrifft ein Gleitelement mit einer Basisschicht und einer auf einer Außenfläche der Basisschicht vorgesehenen Beschichtung, wobei eine Formfläche so definiert ist, dass sie eine Außenfläche der Beschichtung darstellt, und wobei eine Radon-Transformierte g(θ,ρ) eines quadratischen Ausschnitts dieser Formfläche definiert ist, deren Wertebereich auf Werte zwischen 0 und 1 normalisiert ist, und wobei θ der Winkel und p die Distanz zum Koordinatenursprung darstellt, und wobei die Radon-Transformierte g(θ,ρ) in p-Richtung um den Faktor 1/V2 gekürzt wird, und wobei für jeden Winkel θ eine Standardabweichung der Radon-Transformierten σ_{ρ}(θ) und ein Wert 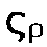 (θ) = Σ_{ρ} |g(θ,ρ )- *g̅*| der Radon-Transformierten definiert ist, wobei *g̅* der Mittelwert aller g(θ,ρ) des jeweiligen Winkel θ ist, und wobei σₘₐₓ, σₘᵢₙ, σ̅, die maximale Standardabweichung, die minimale Standardabweichung und der Mittelwert der Standardabweichungen ist, sowie 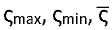 das Maximum der Werte 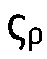 , das Minimum der Werte 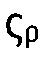 und der Mittelwert der Werte 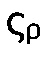 ist , und wobei ein Parameter A definiert ist als A = (σₘₐₓ-σₘᵢₙ)/σ̅ * ( 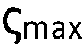 - 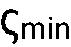 )/ 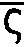 .

Bei hydrodynamischen Gleitlagern gilt es dabei zu beachten, dass der erforderliche Schmierfilm für einen verschleißarmen Betrieb erst durch Rotation eines Maschinenteils, beispielsweise einer Welle, aufgebaut werden muss. Hierbei entsteht über die Rotation der Welle eine hydrodynamische Druckverteilung im Schmierstoff, die der von außen wirkenden Lagerkraft entgegenwirkt. Bei ausreichender Größe dieser Kraft, die beim Erreichen einer Mindestdrehzahl der Welle erreicht wird, schwimmt die Welle dabei auf den Schmierstoff auf und trennt sich von der Gegenfläche. Bei hydrodynamischen Gleitlagern lassen sich dabei vier Betriebsbereiche unterscheiden. Diese Betriebsbereiche sind Haftreibung, Grenzreibung, Mischreibung und/oder Flüssigkeitsreibung. Bei fehlender Relativbewegung, im Bereich der Haftreibung, oder bei niedrigen Drehzahlen, im Bereich der Grenzreibung sind dabei die beiden Kontaktflächen in unmittelbarem Kontakt zueinander. Mit zunehmender Drehzahl wird der Schmierfilm tragfähiger und das Gleitlagergeht in einen Übergangsbereich über. Man spricht dabei von einem Bereich der Mischreibung. Oberhalb der Mindestdrehzahl liegt der Bereich des Gleitlagers, in dem nur noch Flüssigkeitsreibung auftritt und es somit praktisch keinen Verschleiß gibt.

Insbesondere in modernen Gleitlageranwendungen im Industrie- und Energiegewinnungssektor können sich dabei für Gleitlager extreme Lastfälle ergeben, bei denen die tatsächliche auftretende Last die Nominallast des Lagers üblicherweise überschreitet und bei der die vorliegende Gleitgeschwindigkeit sehr niedrig ist. Diese extremen Lastfälle führen zu kritischen Misch-, Haft- und Grenzreibungsbedingungen mit stark erhöhtem Verschleiß und einer erhöhten Ausfallswahrscheinlichkeit aufgrund von überlastbedingter Schadenscharakteristika. Ein Beispiel hierfür sind Gleitlager in Windkraftanlagen, bei denen die auftretende Last üblicherweise hoch ist und im Betriebsverlauf die Drehzahl je nach vorherrschender Windsituation stark variieren kann.

Um die Ausfallswahrscheinlichkeit des Gleitlagers zu reduzieren, werden in solchen Lagern häufig Zusatzbeschichtungen eingesetzt, welche die tribologischen Eigenschaften im Hinblick auf die Reibwerte und den Verschleiß im Bereich der Haftreibung, Grenzreibung und Mischreibung optimieren sollen. Ein Beispiel für solche Beschichtungen finden sich beispielsweise in der EP1764522B1, das ein Lagerelement, umfassend eine Stützschicht, eine über der Stützschicht angeordnete Lagermetallschicht und eine über der Lagermetallschicht angeordnete, aufgesputterte Gleitschicht auf der eine Gleitlackschicht angeordnet ist, zeigt. Die GB2363433A hingegen zeigt ein Verbundgleitmaterial, das ein Polytetrafluorethylenharz als Hauptbestandteil enthält, und das insbesondere zu einer Verbesserung der Verschleißfestigkeit bei Verwendung als Lagermaterial führen soll.

Dieser Lösungsansatz ist insofern nachteilig, als dass er das Problem nur auf symptomatischer Ebene verbessert, nämlich die negativen Auswirkungen des Betriebs des Gleitlagers in einem ungünstigen hydrodynamischen Zustand abmildert.

Einen attraktiveren Lösungsansatz hingegen stellt eine Verbesserung des hydrodynamischen Druckaufbaus zwischen Gleitlager und Maschinenteil dar, da dies das Betriebsfenster, welches definiert ist über die auftretende Last und die Drehzahl des Maschinenteils, in dem es zum Auftreten von tribologisch ungünstigen Betriebszuständen kommt (Haftreibung, Grenzreibung und Mischreibung) verkleinert und damit das Problem auf ursächlicher Ebene löst.

Einen interessanten Ansatz stellt hierbei dar, die Gleitfläche des Gleitelements derart zu strukturieren, dass sie den hydrodynamischen Druckaufbau inhärent unterstützt. Wirft man hierzu einen Blick auf die mikroskopische Oberflächentopographie solcher Gleitflächen sind dabei insbesondere mechanisch bearbeitete Gleitflächen ungünstig für den hydrodynamischen Druckaufbau, da die Anzahl mikroskopisch verfügbarer hydrodynamischer Keilflächen reduziert ist.

Daher ist die Aufgabe der vorliegenden Erfindung ein Gleitelement mit einer Basisschicht und einer auf einer Außenfläche der Basisschicht vorgesehenen Beschichtung zur Verfügung zu stellen, wobei eine Außenfläche der Beschichtung derart ausgeformt ist, dass der hydrodynamische Druckaufbau durch das Vorhandensein einer Vielzahl an mikroskopischen, hydrodynamischen Keilflächen, insbesondere gegenüber mechanisch bearbeiteter Gleitflächen, begünstigt ist.

Die Aufgabe wird gelöst durch ein Gleitelement gemäß Anspruch 1.

Eine vorteilhafte Ausgestaltung der Erfindung ist ein Gleitelement mit einer Basisschicht und einer auf einer Außenfläche der Basisschicht vorgesehenen Beschichtung. Dabei ist eine Formfläche so definiert, dass sie eine Form einer Außenfläche der Beschichtung darstellt. Zudem ist eine Radon-Transformierte g(θ,ρ) eines quadratischen Ausschnitts dieser Formfläche definiert, deren Wertebereich auf Werte zwischen 0 und 1 normalisiert ist, und wobei θ der Winkel und p die Distanz zum Koordinatenursprung darstellt. Des Weiteren wird die Radon-Transformierte g(θ,ρ) in p-Richtung um den Faktor 1/V2 symmetrisch gekürzt. Für jeden Winkel θ ist dabei eine Standardabweichung der Radon-Transformierten σ_{ρ}(θ) und ein Wert 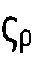 (θ) = Σ_{ρ} | g(θ,ρ)- g̅| der Radon-Transformierten definiert. Hierbei ist g̅ der Mittelwert aller g(θ,ρ) des jeweiligen Winkel θ ist, und σₘₐₓ die maximale Standardabweichungen , σₘᵢₙ die minimale Standardabweichung und σ̅ der Mittelwert der Standardabweichungen, sowie 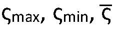 das Maximum der Werte 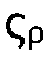 , das Minimum der Werte 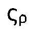 und der Mittelwert der Werte 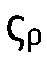 . Des Weiteren ist ein Parameter A definiert ist als A = (σₘₐₓ-σₘᵢₙ)/σ̅* ( 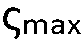 - 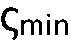 )/ 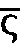 . Die Formfläche weist dabei einen Parameter A von < 1.0, vorteilhafterweise < 0.9, insbesondere vorteilhafterweise von < 0.7 aufweist.

Mit "Des Weiteren wird die Radon-Transformierte g(θ,ρ) in p-Richtung um den Faktor 1/V2 symmetrisch gekürzt" ist dabei gemeint, dass in der Radontransformierten nur Punkte g(θ,ρ) berücksichtigt deren Abstand zum Ursprung p < ρₘₐₓ/√2 beträgt. Bei ρₘₐₓ handelt es sich hierbei um die maximale Distanz zum Koordinatenursprung. Dies ist notwendig, um Randeffekte durch den quadratischen Ausschnitt aus der Formfläche beziehungsweise die quadratische Form des ursprünglichen Oberflächentopographiebildes zu verhindern.

Diese Ausgestaltung hat den Vorteil, dass ein derartiges Gleitelement den hydrodynamischen Druckaufbau zwischen dem Gleitelement und einem gelagerten Maschinenteil stark begünstigt und das Verlassen von Haftreibungs-, Grenzreibungs- und Mischreibungszuständen vereinfacht beziehungsweise die Betriebsdauer in diesen Zuständen reduziert. Dies wird darüber erreicht, dass eine derartige Formfläche derart strukturiert ist, dass sie eine Vielzahl an hydrodynamischen Keilflächen auf mikroskopischer Ebene zur Verfügung stellt, insbesondere auch im Vergleich zu mechanisch bearbeiteten Gleitflächen.

In einer vorteilhaften Ausgestaltung der Erfindung ist vorgesehen, dass die Formfläche über ein orthogonales x-y-z-Koordinatensystem definiert ist, wobei auf der x-Achse eine Längendimension des Gleitelements und auf der y-Achse eine Breitendimension des Gleitelements und auf der z-Achse eine für eine Dickendimension des Gleitelements repräsentative Dimension dargestellt ist. Eine für die Dickendimension des Gleitelements repräsentative Dimension kann dabei beispielsweise eine geometrische Dickenabmessung oder auch ein Grauwert eines Oberflächentopographiebildes sein. Auch andere repräsentative Dimensionen oder Größen sind denkbar. In einer vorteilhaften Ausgestaltung der Erfindung ist vorgesehen, dass es sich bei der für eine Dickendimension des Gleitelements repräsentative Dimension um Grauwerte eines Oberflächentopographiebilds der Beschichtung des Gleitelements bestimmter Größe und bestimmter Bittiefe handelt. Hierbei ist bei der Bestimmung des Parameters A wie folgt vorzugehen: Das Oberflächentopographiebild wird in einem ersten Schritt um Ausreißer und nicht gemessene Punke korrigiert und nachfolgend wird eine Ebene, die durch ein Polynom zweiter Ordnung beschrieben werden kann, zur Hintergrundkorrektur abgezogen. Vor Bestimmung der Standardabweichungen σ_{ρ(θ)} und der Werte 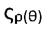 wird die Radontransformierte g_{BG(θ,ρ}) wie folgt korrigiert: Ein Korrekturbild mit gleicher Größe und gleicher Bittiefe wie das Oberflächentopographiebild wird generiert, wobei der Grauwert jedes Bildpunkts zufallsverteilt ist. Anschließend wird eine Radon-Transformierte dieses Korrekturbilds gebildet und die korrigierte Radon-Transformierte g*_{BG(θ,ρ)} darüber berechnet wird, indem von der Radon-Transformierten g_{BG(θ,ρ)} die Radon-Transformierte des Korrekturbilds subtrahiert wird. Abschließend erfolgt die Bestimmung der Standardabweichungen σ_{ρ(θ)} und der Werte 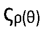 mittels der korrigierte Radon-Transformierten g*_{BG(θ,ρ)}.

Bei der Ermittlung des Parameters A über ein Oberflächentopographiebild, welches mittels konfokaler Bildgebung aufgenommen wurde, muss die Auflösung in einer Ebene, deren Normale parallel zur Normalen der Gleitfläche liegt, dabei kleiner als 1/5 der durch eine mechanische Bearbeitung entstandenen Strukturen, insbesondere Riefen, sein. Zudem muss der Messfleck ausreichend groß sein um mindestens 10 derartige, durch mechanische Bearbeitung entstandene Strukturen, insbesondere Riefen, zu enthalten. Die Auflösung in einer Richtung parallel zu einer zur Gleitfläche normalen Richtung muss kleiner als 50 nm sein. Wurden die durch eine mechanische Bearbeitung entstandenen Strukturen durch eine Beschichtung vollständig oder teilweise kaschiert, müssen die Angaben dennoch in Bezug auf die unter der Beschichtung liegenden Strukturen eingehalten werden.

In einer vorteilhaften Ausgestaltung der Erfindung hat die Außenfläche der Basisschicht einen Parameter A > 1 und weist zumindest einen arithmetischen Mittenrauwert Ra von 1 µm auf. Eine Fläche mit einem Parameter A > 1 ist im Hinblick auf den hydrodynamischen Druckaufbau ungünstig, da die Formfläche hier derart ausgestaltet ist, dass die Anzahl an mikroskopischen, hydrodynamischen Keilflächen gegenüber einer Fläche mit einem Parameter A < 1 reduziert ist. Ein Beispiel für eine Fläche mit A > 1 ist beispielsweise eine Oberfläche eines gedrehten oder gebohrten Bauteils. In einer möglichen Ausgestaltung der Erfindung ist demnach die Außenfläche der Basisschicht mit A > 1 durch die Beschichtung mit einer Formfläche mit Parameter A von < 1.0, vorteilhafterweise < 0.9, insbesondere vorteilhafterweise von < 0.7 aufweist, kaschiert. Dies hat den Vorteil, dass neben anderen tribologisch günstigen Eigenschaften der Beschichtung der hydrodynamischen Druckaufbau des Gleitelements signifikant verbessert wird.

In einer vorteilhaften Ausgestaltung der Erfindung wird der Parameter von < 1.0, vorteilhafterweise < 0.9, insbesondere vorteilhafterweise von < 0.7, nur durch mikroskopische Unebenheit an der Außenfläche der Beschichtung erreicht und die Beschichtung weist eine makroskopisch einheitliche Dicke auf. Unter makroskopisch einheitlicher Dicke ist dabei gemeint, dass die Beschichtung unter Berücksichtigung von mikroskopischen Unebenheiten oder Rauheiten an der Außenfläche der Beschichtung oder der Basisschicht und unter Berücksichtigung von allfälligen Verfahrenstoleranzen beim Aufbringen der Beschichtung gleichmäßig dick ist. Der Parameter ist demnach also ausschließlich durch mikroskopische Unebenheit an der Außenfläche der Beschichtung beeinflusst und nicht durch gewollte, makroskopische Dickenänderungen der Beschichtung.

In einer vorteilhaften Ausgestaltung der Erfindung weist eine Außenfläche der Beschichtung einen arithmetischen Mittenrauwert Ra nach DIN EN ISO 4287, ausgewählt aus einem Bereich mit einer unteren Grenze von 0,1 µm und einer oberen Grenze von 15 µm, auf. Dies hat den Vorteil, dass ein derartiges Rauheitsprofil in Kombination mit einer Formfläche mit Parameter A < 1.0, einerseits eine Vielzahl an mikroskopischen, hydrodynamischen Keilflächen als auch mikroskopische Ölreservoirs günstiger Größe zur Verfügung stellt und tribologisch ungünstige Betriebszustände dadurch besonders schnell verlassen werden können.

In einer vorteilhaften Ausgestaltung der Erfindung ist die Beschichtung als polymerbasierte Schicht ausgeführt, insbesondere als Polyimid-, Polyamid-, Polyamidimid-, Polyetherketon-, oder Polyhalogenolefine-basierte Schicht, insbesondere PTFE, oder einer Mischung hieraus. Dabei besteht die Basisschicht aus einem Werkstoff, der ausgewählt ist aus einer Gruppe umfassend Aluminiumbasislegierungen, Kupfer und Kupferbasislegierungen, Bismutbasislegierungen, Zinn und Zinnbasislegierungen, Silber und Silberbasislegierungen, Zinkbasislegierungen.

Insbesondere Polymer-Beschichtungen mit Imidgruppen zeigen dabei eine Verbesserung in Hinblick auf den Verschleiß sowie eine Verringerung der Ausbruchneigung. Polyetherketon-, oder Polyhalogenolefine-basierte Schicht, beispielsweise PTFE, haben dabei den Vorteil, dass sie bei Anwendungen mit niedriger Drehzahl eine besonders gute Schmierfähigkeit aufweisen.

Zur Herstellung der polymerbasierten Schicht wird aus den einzelnen Komponenten, also einer Vorstufe des Polymers, möglichen Festschmierstoffpartikeln, möglichen Metalloxidpartikeln und gegebenenfalls möglichen Hartstoffpartikeln, mit einem Dispersionsmittel, insbesondere einem organischen Lösungsmittel- oder Lösungsmittelgemisch, eine Dispersion nach üblichen Verfahren hergestellt. Diese Dispersion wird dann auf die zu beschichtende Oberfläche mit in der Lacktechnik üblichen Verfahren aufgetragen, also beispielsweise aufgesprüht, aufgestrichen oder aufgetaucht.

Zur Ausbildung von polymerbasierten Schichten mit einem Parameter A < 1.0 ist dabei insbesondere das eingesetzte Lösungsmittel bzw. Lösungsmittelgemisch und die Temperatur des Substrats bzw. der zu beschichtenden Oberfläche entscheidend. Am Beispiel von PAIbasierten Schichten wären beispielhaft günstige Lösungsmittelmischungen die folgenden Lösungsmittel: NMP, NEP, NBP, GBL, DSMO oder DMF, gemischt einem oder mehreren der folgenden hochflüchtigen Verschnittlösemittel: Xylol, Cyclohexan, n-Hexan, Testbenzin, Naphta, Propanol, n-Butanol, Isobutanol oder Butylglycol. Günstige Mischungsverhältnisse zwischen Lösungsmittel und den Verschnittlösemittel wären dabei ein Lösungsmittelanteil zwischen 70 und 90 Massenprozent und Verschnittlösemittelanteil von 10 bis 30 Massenprozent. Neben dem Parameter A kann über das Mischungsverhältnis beispielsweise auch die entstehende Oberflächenrauhigkeit beeinflusst werden. Eine geeignete Substrattemperatur für PAI-basierte Schichten liegt zudem zwischen 70 °C und 80 °C. Erfindungsgemäß wäre das Substrat hierbei die Basisschicht auf welche die Beschichtung aufgebracht wird.

In einer weiteren vorteilhaften Ausgestaltung der Erfindung wird die Beschichtung über Pulsed-Laser-Deposition oder Suspension Plasma Spraying aufgebracht. Hierbei besteht die Basisschicht aus einem Werkstoff, der ausgewählt ist aus einer Gruppe umfassend Aluminiumbasislegierungen, Kupfer und Kupferbasislegierungen, Bismutbasislegierungen, Zinn und Zinnbasislegierungen, Silber und Silberbasislegierungen, Zinkbasislegierungen. Beide Herstellungsverfahren sind dabei insbesondere zur Herstellung von Formfläche mit einem Parameter A von < 1.0 geeignet. Suspension Plasma Spraying hat dabei den zusätzlichen Vorteil, dass durch die Zuführung des Pulvers als Suspension die Abscheidung feinerer Mikrostrukturen ermöglicht, was die tribologischen Eigenschaften der Beschichtung verbessern kann. Mit beiden Verfahren können dabei insbesondere auch Beschichtungen mit feinkolumnaren Mikrostrukturen hergestellt werden, was die Spannungsverteilung im Bereich des tribologischen Kontakts und die Verformung der Beschichtung unter starker Belastung beeinflussen kann.

In einer vorteilhaften Ausgestaltung der Erfindung handelt es sich bei dem Gleitelement dabei um ein Gleitelement in einem Windkraftanlagengetriebe, das als Planetengetriebe ausgeführt ist. Die Verbesserung des hydrodynamischen Druckaufbaus bei solchen Gleitlagern ist besonders wichtig, da die auftretende Last in dieser Art von Lagern üblicherweise hoch ist und im Betriebsverlauf die Drehzahl je nach vorherrschender Windsituation stark variieren kann.

In einer vorteilhaften Ausgestaltung der Erfindung erzielt das Gleitelement bei kritischen Misch-, Haft- und Grenzreibungsbedingungen dabei gute tribologische Eigenschaften. Hierbei weist das Gleitelement einen dynamischen Reibungskoeffizienten < 0.04, vorteilhafterweise < 0.03, insbesondere vorteilhafterweise < 0.02, auf. Zusätzlich beträgt bei einer tribologischen Prüfung zur Bestimmung der Verschleißhöhe, die Verschleißhöhe maximal 50 µm, vorteilhafterweise maximal 20 µm, insbesondere vorteilhafterweise maximal 10 µm.

Definitionsgemäß wird dabei zur Ermittlung des dynamischen Reibungskoeffizienten entsprechend den kritischen Misch-, Haft- und Grenzreibungsbedingungen ein Ring-on-disc Test mit niedriger Gleitgeschwindigkeit und hoher Last durchgeführt. Das Prüfprogramm wird dabei wie folgt aufgebaut: Startend mit einer anfänglichen Einlaufphase mit einer Gleitgeschwindigkeit von 0.2 m/s und einer Last (ausgedrückt als Flächenpressung in MPa) von 20 MPa für 7200 Sekunden (2 Stunden), woraufhin die Gleitgeschwindigkeit linear mit einer Rate von 0.025 m/s^2 auf 0.02 m/s reduziert wird und die Last kontinuierlich innerhalb von 2800 s gesteigert wird (mit einer Rate von ca. 0.0179 MPa/s), bis eine Last von 70 MPa erreicht wird, woraufhin die Last konstant auf diesem Wert verbleibt. Dieser Prüfbereich (Gleitgeschwindigkeit 0.02 m/s bei einer Last von 70 MPa) wird über 7200 Sekunden gehalten und auf diese Weise der Mittelwert des dynamische Reibungskoeffizienten der letzten 1800 Sekunden bestimmt. Die Prüftemperatur hierbei liegt bei 60 °C, als Schmiermittel wird Amsoil Power Transmission EP Gear Lube ISO-320 verwendet. Zur Durchführung der Tests wurde folgendes Tribometer genutzt: WAZAU-Tribometer TYPE TRM 1000. Definitionsgemäß wird zur Ermittlung der Verschleißhöhe entsprechend den kritischen Misch-, Haft und Grenzreibungsbedingungen ein Ring-on-disc Test mit niedriger Gleitgeschwindigkeit und hoher Last durchgeführt. Dabei kommt folgendes Prüfprogramm zum Einsatz: Von einer anfänglichen Gleitgeschwindigkeit von 0 m/s wird die Gleitgeschwindigkeit linear mit 1/20 m/s² erhöht bis eine Gleitgeschwindigkeit von 1 m/s erreicht wird, diese wird für 20 Sekunden gehalten und anschließend wird die Gleitgeschwindigkeit linear mit 1/20 m/s² reduziert, bis die Gleitgeschwindigkeit einen Wert von 0 m/s erreicht. Die Gleitgeschwindigkeit von 0 m/s wird dabei für 20 Sekunden gehalten, bevor 4 der Prüfzyklus wieder identisch beginnt. Während des gesamten Prüfzyklus wird die Last konstant bei 10 MPa belassen. Der Prüfzyklus wird insgesamt 2000 Mal wiederholt, was einer Gleitstrecke von 90000 m entspricht. Die Prüftemperatur hierbei liegt bei 60 °C, als Schmiermittel wird Amsoil Power Transmission EP Gear Lube ISO-320 verwendet. Zur Durchführung wurde der Tests wurde folgendes Tribometer genutzt: WAZAU-Tribometer TYPE TRM 1000. Die Verschleißhöhe wurde dabei nachfolgend optisch mittels Leica DCM8 Optisches 3D-Oberflächenmesssystem ermittelt. Die Ermittlung der Verschleißhöhe erfolgt dabei an 4 um jeweils 90° versetzten Stellen an der Probe. Dabei erfolgen jeweils zwei Flächenmessungen, wobei sich einer der Messbereiche im Gebiet des maximalen Verschleißes ("Verschleißgraben") und sich ein zweiter Messbereich außerhalb des Verschleißgrabens befindet. Die Höhendifferenzen der Flächen werden im Anschluss gemittelt. Solche tribologischen Prüfungen sind dem Fachmann geläufig und die Kennwerte werden üblicherweise an verschiedenen Proben bestimmt

Nach einer besonderen Ausführungsform ist ein Verfahren zur Herstellung eines Gleitelements umfassend die Verfahrensschritte vorgesehen:
- Bereitstellen eines Gleitelements mit einer mechanisch bearbeiteten Basisschicht
- Aufbringen einer Beschichtung auf einer Außenfläche der Basisschicht zur Herstellung eines Gleitelements gemäß Anspruch 1.

Die Erfindung wird nachfolgend in nicht-einschränkender Weise schematisch anhand bevorzugter Ausführungsformen erläutert.

Es zeigen:
Fig. 1 ein Gleitelement in Halbeschalenform und in Schrägansicht.
Fig. 2 ein Gleitelement in einem Planetengetriebe einer Windkraftanlage.
Fig. 3 eine Auswertung des Parameters A bei Gleitelementen mit erfindungsgemäßer Beschichtung im Vergleich mit Gleitelementen mit mechanisch bearbeiteter Gleitfläche.

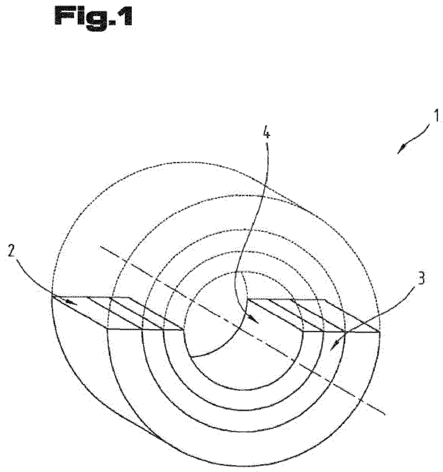

In Fig. 1 ist eine Ausführungsvariante eines Gleitelementes 1 in Schrägansicht dargestellt. Das Gleitelement 1 ist hierbei aus einem Stützkörper 2, einer Basisschicht 3 sowie einer Beschichtung 4 aufgebaut. Das Gleitelement 1 nach Fig. 1 weist die Form einer Halbschale auf. Diese kann mit einer weiteren Halbschale zur Ausbildung der Gleitlagerung kombiniert werden. Die beiden Halbschalen können gleich oder unterschiedlich aufgebaut sein. Es besteht aber auch die Möglichkeit, dass das Gleitelement 1 in Form einer Drittelschale, etc. ausgebildet ist. In diesem Fall wird das Gleitelement 1 mit der entsprechenden Anzahl an weiteren Gleitelementen zur Ausbildung der Gleitlagerung kombiniert. Der Stützkörper 2 besteht aus einem metallischen Werkstoff, üblicherweise aus Stahl, kann aber auch aus einem Werkstoff bestehen, mit dem dieselbe bzw. eine ähnliche Funktion, nämlich die Bereitstellung der mechanischen Festigkeit des Gleitelementes 1, realisiert werden kann. Beispielsweise können auch verschiedenste Kupferlegierungen, wie z.B. Messing, Bronzen, Verwendung finden. Im Rahmen der Erfindung sind aber auch Direktbeschichtungen von Bauteilen, wie z.B. das Auge einer Pleuelstange, möglich. In diesem Fall wird der Stützkörper 2 durch das jeweilige Bauteil selbst gebildet. Die Basisschicht 3 ist durch eine Lagermetalllegierung gebildet. Derartige Lagermetalllegierungen sind aus dem Stand der Technik bekannt. Beispielsweise kann die Lagermetalllegierung ein Werkstoff bestehen, ausgewählt aus einer Gruppe umfassend Aluminiumbasislegierungen, Kupfer und Kupferbasislegierungen, Bismutbasislegierungen, Zinn und Zinnbasislegierungen, Silber und Silberbasislegierungen, Zinkbasislegierungen. Obwohl in Fig. 1 das Gleitelement 1 als Dreischichtlagerelement dargestellt ist, kann das Gleitelement 1 auch weniger oder mehr als drei Schichten aufweisen. Beispielsweise kann die Beschichtung 4 direkt auf den Stützkörper 2 aufgebracht sein, in diesem Fall würde der Stützkörper die erfindungsgemäße Basisschicht darstellen. Ebenso können übliche Zwischenschichten, wie z.B. zumindest eine Bindeschicht oder zumindest eine Diffusionssperrschicht, bei Bedarf angeordnet sein. Dies zumindest eine Bindeschicht kann zwischen dem Stützkörper 2 und der Basisschicht 3 und/oder zwischen der Basisschicht 3 und der Beschichtung 4 angeordnet sein. Die zumindest eine Diffusionssperrschicht kann zwischen dem Stützkörper 2 und der Basisschicht 3 und/oder zwischen der Basisschicht 3 und der Beschichtung 4 angeordnet sein. Die Beschichtung 4 kann dabei als polymerbasierte Schicht mit Festschmierstoffpartikel und/oder Metalloxidpartikel ausgebildet sein, aber auch als metallische, keramische und Verbundbeschichtungen ausgeführt sein. Mögliche Festschmierstoffe sind bereits aus dem Stand der Technik hinlänglich für diesen Verwendungszweck bekannt.

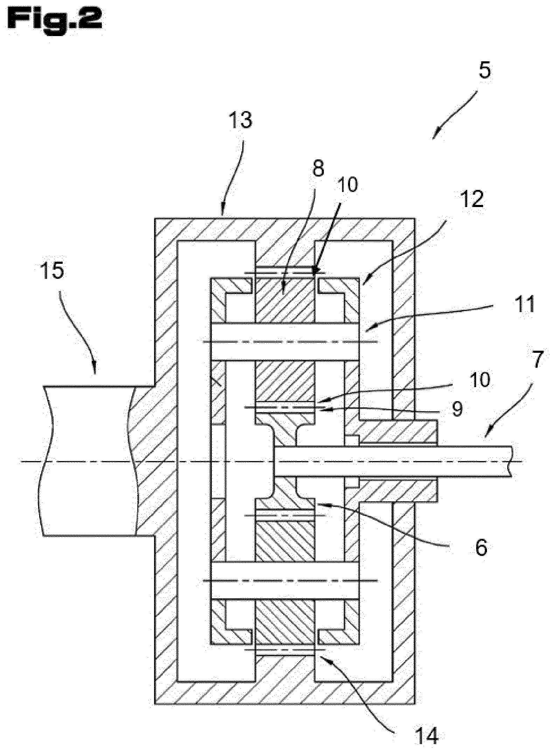

Figur 2 zeigt das Getriebe 5 einer Windkraftanlage, das ein Sonnenrad 6 aufweist, das mit einer Welle 7, die zum Generatorrotor oder einer anderen Getriebestufe (nicht gezeigt) führt, drehfest verbunden ist. Das Sonnenrad 6 ist von mehreren Planetenrädern 8, beispielsweise zwei, vorzugsweise bis zu neun, umgeben. Sowohl das Sonnenrad 6 als auch die Planetenräder 8 weisen eine Verzahnung 9, 10 auf, die in kämmenden Eingriff miteinander stehen. Die Planetenräder 8 sind auf einer durch einen Planetenbolzen gebildeten Achse 11, der so genannten Planetenachse, gelagert. Diese Achsen 11 können entweder einstückig mit zumindest einem Teil eines Planetenträgers 12 ausgebildet sein oder sie sind als gesonderte Bauteile in Bohrungen des Planetenträgers 12 eingesetzt. Über den Planetenrädern 8 ist ein Hohlrad 13 angeordnet, das an einer inneren Oberfläche ebenfalls zumindest teilweise eine Verzahnung 14 aufweist, die in kämmendem Eingriff mit der Verzahnung 10 der Planetenräder 8 steht. Das Hohlrad 13 ist drehfest mit einer Rotorwelle 15 des Rotors der Windkraftanlage verbunden. Die Verzahnungen 9,10, 14 ist als Schrägverzahnung ausgeführt.

Eine mögliche Ausführungsform zur Anordnung des Gleitelements 16 ist dabei als Lagerbuchse die drehfest mit einem Planetenrad 8 verbunden ist, beispielsweise über einen Presssitz oder über eine andere, geeignete Methode. Eine mögliche Ausführungsform ist jedoch auch, dass das Gleitelement 16 direkt an der Achse 11, im Bereich der Lagerung des Planetenrades 8, und/oder direkt am Planetenrad 8 selbst, im Bereich der den Planetenbolzen aufnehmenden Bohrung, angeordnet ist. Auch andere dem Fachmann geläufige Anordnungen des Gleitelements sind natürlich denkbar.

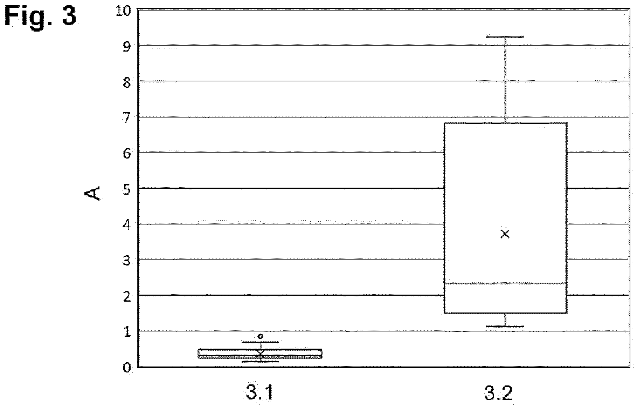

Figur 3 zeigt eine Auswertung des Parameters A in Form eines Box-Plots/Kastendiagramms. Bei Graph 3.1 handelt es sich dabei um ein Gleitelemente mit einer erfindungsgemäßen Beschichtung, deren Parameter A < 1.0 ist, wodurch der hydrodynamische Druckaufbau durch das Vorhandensein einer Vielzahl an mikroskopischen, hydrodynamischen Keilflächen begünstigt ist. Bei Graph 3.2 handelt es sich hingegen um eine Messreihe aus mechanisch bearbeiteten Gleitflächen ohne erfindungsgemäße Beschichtung mit einem Parameter A > 1.0. Bei der mechanischen Bearbeitung handelt es sich dabei beispielsweise um Schleifen, Drehen oder Feinbohren.

## Patentansprüche

1. Gleitelement mit einer Basisschicht und einer auf einer Außenfläche der Basisschicht angeordneten Beschichtung, wobei eine Formfläche so definiert ist, dass sie eine Außenfläche der Beschichtung darstellt, und wobei eine Radon-Transformierte g(θ,ρ) eines quadratischen Ausschnitts dieser Formfläche definiert ist, deren Wertebereich auf Werte zwischen 0 und 1 normalisiert ist, und wobei θ der Winkel und p die Distanz zum Koordinatenursprung darstellt, und wobei die Radon-Transformierte g(θ,ρ) in p-Richtung um den Faktor 1/V2 symmetrisch gekürzt wird, und wobei für jeden Winkel θ eine Standardabweichung der Radon-Transformierten σ_{ρ}(θ) und ein Wert 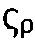 (θ) = Σ_{ρ} |g(θ,ρ )- *g̅*| der Radon-Transformierten definiert ist, wobei *g̅* der Mittelwert aller g(θ,ρ) des jeweiligen Winkel θ ist, und wobei σₘₐₓ, σₘᵢₙ, σ̅ , die maximale Standardabweichung, die minimale Standardabweichung und der Mittelwert der Standardabweichungen ist, sowie 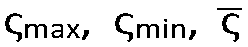 das Maximum der Werte 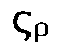 , das Minimum der Werte 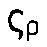 und der Mittelwert der Werte 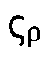 ist, und wobei ein Parameter A definiert ist als A = (σₘₐₓ-σₘᵢₙ)/σ̅ * ( 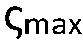 - 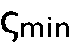 )/ 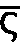 und wobei die Formfläche einen Parameter A von < 1.0, vorteilhafterweise < 0.9, insbesondere vorteilhafterweise von < 0.7 aufweist.

2. Gleitelement nach Anspruch 1, **dadurch gekennzeichnet, dass** die Formfläche über ein orthogonales x-y-z-Koordinatensystem definiert ist, wobei auf der x-Achse eine Längendimension des Gleitelements und auf der y-Achse eine Breitendimension des Gleitelements und auf der z-Achse eine für eine Dickendimension des Gleitelements repräsentative Dimension dargestellt ist.

3. Gleitelement nach Anspruch 2, **dadurch gekennzeichnet, dass** es sich bei der für eine Dickendimension des Gleitelements repräsentative Dimension um Grauwerte eines Oberflächentopographiebilds der Beschichtung des Gleitelements bestimmter Größe und bestimmter Bittiefe handelt.

4. Gleitelement nach einem der vorhergehenden Ansprüche, **dadurch gekennzeichnet, dass** die Außenfläche der Basisschicht einen Parameter A > 1 hat und die Außenfläche der Basisschicht zumindest einen arithmetischen Mittenrauwert Ra von 1 µm aufweist.

5. Gleitelement nach einem der vorhergehenden Ansprüche, **dadurch gekennzeichnet, dass** der Parameter A der Formfläche von < 1.0, vorteilhafterweise < 0.9, insbesondere vorteilhafterweise von < 0.7, nur durch mikroskopische Unebenheit an der Außenfläche der Beschichtung erreicht wird und die Beschichtung eine makroskopisch einheitliche Dicke aufweist.

6. Gleitelement nach einem der vorhergehenden Ansprüche, **dadurch gekennzeichnet, dass** eine Außenfläche der Beschichtung einen arithmetischen Mittenrauwert Ra nach DIN EN ISO 4287 aufweist, ausgewählt aus einem Bereich mit einer unteren Grenze von 0,1 µm und einer oberen Grenze von 15 µm.

7. Gleitelement nach einem der vorhergehenden Ansprüche, **dadurch gekennzeichnet, dass** die Beschichtung als polymerbasierte Schicht ausgeführt ist, insbesondere als Polyimid-, Polyamid-, Polyamidimid-, Polyetherketon-, oder Polyhalogenolefine-basierte Schicht, beispielsweise PTFE, oder einer Mischung hieraus und wobei die Basisschicht aus einem Werkstoff besteht, der ausgewählt ist aus einer Gruppe umfassend Aluminiumbasislegierungen, Kupfer und Kupferbasislegierungen, Bismutbasislegierungen, Zinn und Zinnbasislegierungen, Silber und Silberbasislegierungen, Zinkbasislegierungen.

8. Gleitelement nach einem der Ansprüche 1-6, wobei die Beschichtung über Pulsed-Laser-Deposition oder Suspension Plasma Spraying aufgebracht wird und wobei die Basisschicht aus einem Werkstoff besteht, der ausgewählt ist aus einer Gruppe umfassend Aluminiumbasislegierungen, Kupfer und Kupferbasislegierungen, Bismutbasislegierungen, Zinn und Zinnbasislegierungen, Silber und Silberbasislegierungen, Zinkbasislegierungen.

9. Gleitelement nach einem der vorhergehenden Ansprüche, **dadurch gekennzeichnet, dass** es sich um ein Gleitelement in einem Windkraftanlagengetriebe, das als Planetengetriebe ausgeführt ist, handelt.

10. Gleitelementen nach einem der vorhergehenden Ansprüche, **dadurch gekennzeichnet, dass** das Gleitelement bei kritischen Misch-, Haft- und Grenzreibungsbedingungen gute tribologische Eigenschaften erzielt, wozu das Gleitelement einen dynamischen Reibungskoeffizienten < 0.04, vorteilhafterweise < 0.03, insbesondere vorteilhafterweise < 0.02, aufweist und bei einer tribologischen Prüfung zur Bestimmung der Verschleißhöhe, die Verschleißhöhe maximal 50 µm, vorteilhafterweise maximal 20 µm , insbesondere vorteilhafterweise maximal 10 µm, beträgt.

11. Verfahren zur Herstellung eines Gleitelements umfassend die Verfahrensschritte:
- Bereitstellen eines Gleitelements mit einer mechanisch bearbeiteten Basisschicht
- Aufbringen einer Beschichtung auf einer Außenfläche der Basisschicht zur Herstellung eines Gleitelements gemäß Anspruch 1.
